# EUROPEAN PATENT SPECIFICATION

(11) **EP 0 371 660 B1**
(45) Date of publication and mention of the grant of the patent: **17.04.1996**
(21) Application number: 89311904.0
(22) Date of filing: 17.11.1989
(51) Int. Cl.: G02B 6/44, H01B 7/00, H01B 11/00

(54) **Electro-opto-mechanical cable for fiber optic transmission systems**
Elektrooptisches mechanisches Kabel für faseroptische Nachrichtensysteme
Câble électro-optique mécanique pour des systèmes de télécommunication par fibre optique

(30) Priority: 17.11.1988 US 272571
(43) Date of publication of application: 06.06.1990
(73) Proprietor: Stamnitz, Timothy Carl, Encinitas California 92024 (US)
(72) Inventor: Stamnitz, Timothy Carl, Encinitas California 92024 (US)
(74) Representative: Madgwick, Paul Roland

(56) References cited:
- WO-A-84/00820
- GB-A- 2 010 528
- GB-A- 2 010 528
- GB-A- 2 154 334
- GB-A- 2 213 960
- US-A- 4 156 104
- US-A- 4 199 224
- US-A- 4 239 336
- US-A- 4 606 604
- US-A- 4 763 981

## Description

The invention relates to a fiber-optic transmission cable for high-stress environments and especially undersea applications comprising one to a large number of optical fibers, electrical conductors, and metallic wire strength members contained within a single cable structure.

### Background of the Invention

Among the prior art patents relating to this field are: (a) GB-A-2 010 528 (Underwater Cable, Inventor Jackson) and (b) WO-A-84/00820 (A Hermetically Sealed Tube Incorporating an Optical Fiber Surrounded by an Armored Cable, Inventors R.E. Thompson, G. Gould, and C. Soodak). GB-A-2 010 528 shows an "Underwater Cable" comprising optical fibers in an electrically conductive tube (2) for transmission of electrical power between repeaters. The reference makes no mention of its having the capability for transmitting low-noise optical phase data. WO-A-84/00820 describes a method of fabricating a hermetically sealed optical fiber tube comprising at least two cylindrical metal sections fitting together around a core of one or a plurality of optical fibers, wherein the two metal sections are preshaped by rolling from an annealed wire. This reference makes no mention of any recognition that an optical fiber in a hermetically sealed steel tube has the capability to transmit low-noise optical phase data. The steel tube with two cylindrical metal sections in WO-A-84/00820 is not equivalent to a small, thin-walled tube having one longitudinal welded seam, and further, it is clear to those skilled in the art that the "method of fabrication" covered in WO-A-84/00820 cannot be used to fabricate a small, thin-walled tube. None of the teachings in either of these two references provides motivation for one skilled in the art to incorporate the steel tube of WO-A-84/00820 into the GB-A-2 010 528 underwater cable. For example, it is not clear that one skilled in the art would incorporate the steel tube of the former invention into the latter cable, because such an act would destroy the functionality of the GB-A-2 010 528 "underwater cable," by making it impossible to transmit sufficient electrical power to undersea repeaters, which is a primary object of that invention. Further, there is nothing in either of the references which suggests that they could be combined to provide for the transmission of low-noise optical phase data.

Inequivalency of Claim 1 Tube to the Steel Tube in WO-A-84/00820. The hermetically sealed steel tube of WO-A-84/00820 is not equivalent to small-diametered thin-walled tube of Claim 1.

The prior art cables already perform adequately for their intended application; i.e., the WO-A-84/00820 cable uses a relatively large, thick-walled steel tube to withstand the fabrication stress of the method described and to withstand the 20,000 psi of the well-logging application, while the GB-A-2 010 528 cable employs a very large electrically conductive tube in order to supply electrical power to underwater repeaters. There is no practical motivation for combining the prior art to achieve a new function of "transmission of low-noise optical phase data." Prior to the teachings of the present invention, there was nothing to lead one skilled in the art to believe that such a combination ever would be contemplated.

Prior art optical fiber communication cable includes four distinct generic constructions or arrangements of the electrical, optical, and mechanical elements to achieve the required respective performance functions. In the first approach the optical fibers are placed into a system of polymeric tubes cabled about a central strength member core, or into a radial system of chambers in the form of a helix about a central steel strength member. In a second generic approach, the fibers are encapsulated into a polymeric matrix which is enclosed within a composite system comprised of steel strength member wires and a relatively large diametered, thick-walled tubular copper conductor. The steel wires and the tubular copper conductor are always adjacent and in contact. The third generic approach attempts to incorporate optical fibers into existing electromechanical cable structures by providing a tight-buffer; i.e., added strengthening and jacketing of the individual fibers, such that they may be handled and processed on an equal footing with insulated electrical conductors. This method is known as the hybrid design approach. The fourth and most recent generic approach utilizes a copper alloy tube which is improved with respect to providing a much smaller diameter for encapsulation of the optical fibers; in addition, a synthetic fiber strength member is placed in an outermost annular region of the cable cross-section.

The first generic type of cable configuration is exemplified by the U.S. Patent No. 4,143,942 (Anderson, dated 3/13/79) and U.S. Patent No. 4,199,224 (Oestreich, dated 4/22/79). In the former patent, a fiber or a multiplicity of fibers are enclosed within a polyacrylonitrile sheath, and as many as six of these units are in turn cabled about a central, synthetic fiber (i.e., KEVLAR/du Pont) strength member core. No electrically conductive path is provided. In the latter patent (#4,199,224) the cabled bundle is replaced by a radial system of chambers that are helical extruded and appear as radial "ribs" in the transverse cable cross-section. One or more optical fibers are placed in the chambers formed by the helical ribs which are formed directly over the central steel wire strength member. Insulated electrical conductors are placed in a layer over the system of chambered fibers, then covered by polymeric tapes and an external jacket.

The second generic type of optical fiber communication cable is represented by the Mondello U.S. Patent 4,156,104 (5/22/79) and the Parfree and Worthington U.S. Patent 4,239,336 (12/16/80), intended for use as optical fiber submarine cables. In the former patent (#4,156,104) the fibers are captured in an annular region of extruded elastomer around a central steel "kingwire." A maximum of twelve fibers are thus enclosed in an approx 2.6 mm overall diameter (OD). The latter is surrounded by at least two layers of unidirectional steel stranding, which is jacketed with a copper tube pulled down over the steel strand and swaged into the outermost interstices of the outer layer of steel wires to obtain positive mechanical contact. The latter is covered with an electrical grade dielectric of polyethylene to 21.0 mm OD. This extrusion represents the only physical/mechanical protection for the electro-optic functions of the cable. Similarly, the Parfree and Worthington fiber optic cable invention (#4,239,336) contains a composite steel strength member and thick-walled tubular electrical conductor adjacent to each other and enclosing a number of optical fibers along with a polymeric filler material in the center of the cable. In contradistinction to the Mondello cable invention, a dual-system of relatively large diametered, thick-walled copper tubes is formed in two processing operations over the optical fibers, and the resulting unit is surrounded with two contrahelical layers of steel wire strength members in direct contact with the outer surface of the tubular electrical conductor. This composite tubular conductor is then extruded with an electrical grade of polyethylene to a diameter greater than 25.4 mm OD. Again, the latter extrusion represents the only protection for the electro-optic functions of the cable.

The third generic approach or 'hybrid method' relates to prior art in fiber optic tow cables and ROV umbilical cables, which utilize variations of traditional EM cables to incorporate tight-buffered optical fiber elements on an equal footing with insulated electrical elements into the cable structure. A tight-buffer implies the fiber optics are individually strengthened and jacketed with various synthetic yarns, or steel wires, or composite glass/epoxy directly over and in contact with the primary/secondary buffer on the "as manufactured" optical fiber. (For a review of the pertinent methods and associated diameters for the individual fiber units see "Small-Diameter, Undersea, Fiber Optic Cable", T. Dohoda and T. Stamnitz, Proc. DOD Fiber Optics '88, McClean, Va., 23 Mar 88; for a review of the generic ROV and tow cable configurations incorporating these units see "Fiber-Optic Tether Cable for ROV's", Proc. DOD Fiber Optics '88, McClean, Va. 23 Mar 88; for a historical view on placing fiber optics into EM tow cable and ROV applications see, "Development and Design of Underwater Cable", T. Stamnitz, Sea Technology, Vol. 25, No. 7, pg. 29-33, July 1984).

The fourth and most recent generic configuration for an undersea, fiber optic cable is disclosed in U.S. Patent 4,763,981 issued to G.A. Wilkins (8/16/88). Based upon a relatively small-diametered copper tube for encapsulation of the optical fibers, Wilkins achieves the potential for a significant cable diameter reduction, while providing a synthetic strength member outside the dielectric to serve as armoring protection for the electro-optic functions of the cable. The crucial aspect of this invention involves the forming of relatively narrow, extremely long lengths of copper alloy strip into a small-diametered tube (0.9 to 3.2 mm) which is longitudinally seamed by a brazing process.

### Assessment of prior Art

The two variations of the first generic approach to fiber optic transmission cable described above have intrinsic limitations with respect to high stress and especially undersea environments. The first patented approach utilizes a central synthetic fiber; i.e., KEVLAR strength member, which experiences significant axial strain (0.5 % minimum and 1.0% nominal) at working loads as low as one-fifth of the rated cable breaking load. This level of cable elongation is not compatible with a long (ten to twenty year) optical fiber life. In both patented approaches of this type, the strength member is located in the center of the cable, such that it does not provide armoring protection for the optical fibers. For high stress cable deployments from a cable-laying ship at sea, it is extremely difficult to obtain load-transfer from the center strength member to the outside of the cable jacket which is the only surface availabe for gripping and holding by the caterpuller hauler and/or winch drum. The system of plastic tubes and or grooves within the plastic-rimmed spaces can be easily deformed or "squashed" during cyclic bending over sheaves under high cable tension. This lateral compressive stress can be translated to the optical fibers within. The center strength member KEVLAR cable with optical fibers in the plastic tubes does not provide a path for electrical power transmission. In the helically extruded system of radial plastic chambers enclosing fibers about the center steel strength member, multiple insulated electrical conductors may be cabled about the plastic ribbed chambers, however, significant armoring protection for the electrical leads is not provided. In addition for an undersea submarine cable, the system-level design considerations favor having one large electrical power conductor, which is unavailable in the context of this design.

Several problems have been recognized from actual experience with optical fiber submarine cable constructed in accordance with the second generic approach described earlier. One major problem concerns the vulnerability of the cable to sharkbite, abrasion, and anchor dragging. Much of the deep-water cable manufactured previously has now been provided with additional metallic alloy tube shielding over the dielectric [fish-bite protected (FBP)] and an outer jacket of high-density polyethylene to a diameter ≥ 31.75 mm [see for example, "Sharkbite on the SL Submarine Lightwave Cable System: History, Causes, and Resolution", L.J. Marra, IEEE JRNL OCEANIC ENGRG, Vol. 14, No. 3, Jul 89, p.230-237]. The FBP fix involves added material and manufacturing costs. Further the diameter increase corresponds to a reduction in the total continuous length of cable that can be carried by the cable laying ship. It is important to realize, since the patented approaches under discussion do not provide armoring protection for the electro-optic functions of the cable, these cables can only be used safely in deep-water applications ( ≥ ∼1500 meter depths) [this comment applies even to the FBP cable]. For shallow water use and shore-crossing zones, where the cable may be subjected to anchor damage from ships and/or excessive wave action, the cables must receive additional steel armoring protection (see "Design and Testing of the SL Cable", A. Adl et al, JRNL. LW. TECH., LT-2, No. 6, Dec 84, especially p. 826, Section D and Figure 6). Finally, the manufacturing of the center strength member deep-sea cable, i.e., the copper-jacketed steel strand described in Mondello U.S. Patent 4,156,104 and the preceding Adl et al reference, requires an expensive, relatively high-technology processing line that evolved from submarine coax manufacture [see "Armorless Cable Manufacture", B.W. Lerch et al, BELL SYS.TECH.JRNL., Jul 1964, p. 1209-1241; "Design and Manufacture of an Experimental Lightguide Cable for Undersea Transmission Systems", Robert F. Gleason et al, 27th ANNUAL INTRNL.WIRE & CABLE SYMPOSIUM, Nov 1978; and International Submarine Cable Systems. (ed) Seiichi Shimura, KDD Engineering and Consulting, Inc., Tokyo, Japan, 1984, especially Chapter 6: "Manufacture of Submarine Cables", p. 249-264]. Due to the great equipment capitalization expense and high degree-of-difficulty in operating the processing line for copper-jacketing of steel-strand containing the tight-buffered fiber-optic unit, manufacture of this type of optical submarine cable is limited to one cable company in the U.S.A. (Simplex Wire & Cable Co.), and to only a few others in the entire world. This fact results in high cost for fiber-optic submarine cable and limited availability. Finally, a severe limitation for the patented design approaches to optical submarine cable, is the fact that due to the extensive difficulties involved in setting up the processing line to manufacture the composite steel/copper strand at a particular dimension, it is not possible to readily adjust the cables properties; i.e., dimensions, strength, electrical power transfer, and the number of optical fibers contained therein (12 is typically the maximum number).

While the third generic or hybrid approach for incorporating optical fibers into EM cables proved fruitful for the transmission of digital optical data, a growing need became apparent for a true electro-opto-mechanical cable, in particular for undersea towing or ROV umbilical applications, having a reduced diameter to reduce hydrodynamic drag forces. At the same time, a requirement for a large number of fibers within a small diameter tow cable has evolved from the requirements for an array of a large number of fiber-optic hydrophones. Neither the small-diameter tow cable requirement nor the requirement for transmission of phase-modulated data from fiber-optic hydrophones can be satisfied by a cable using fibers in the tight-buffered configuration.

Referring to the fourth generic configuration for undersea, fiber-optic cable, the small-diametered copper alloy tube element, unfortunately, cannot be manufactured reliably and uniformly due to the difficulty in sealing the longitudinal seam; such that this product is not available at the present time. During a seven year development (1980-87), a laser-welding process for the seam of the copper tube could not be established without damaging the optical fibers and/or void-fill within the tube. The brazing process defined for closure of the copper tube seam suffered from several deficiencies in practice. Either the soldering material melted during subsequent thermoplastic extrusion over the tube causing manufacturing problems, or the inadequately seamed tube allowed the intrusion of seawater during undersea operation. Seawater instrusion during operation leads to hydrogen evolution inside the tube, which causes hydrogen-darkening of the optical fibers. In addition, requirements have arisen for undersea tow cables and long-haul submarine cables that require a higher fiber count ( ≥ 100 or more) than can be provided in the Wilkins approach. The 'largest' small-diametered copper alloy tube contemplated in this invention is about 3.2 mm, which in view of the manufacturing process, may be compatible with a maximum of about 40 fibers (12 fibers is the maximum number that has been attempted in practice). Finally, the annular composite strength member; typically formed from a composite E-glass/epoxy or KEVLAR/epoxy, results in a relatively low cable specific gravity, which is not compatible with many undersea applications requiring a certain cable sink-rate and/or some cable self-burial after installation on the seafloor.

There is now great commercial and military interest in defining an economic fiber-optic submarine cable that provides both improved survivability (for use at depths less than 1500 meters), the possibility of manufacture by many cable vendors, and a reduced transportation volume; for example, it is desired to provide a cable with over-all diameter ≤ ∼12.7 mm. Further, it is desired that the detailed operational characteristics of this cable are easily adjustable, so that a family of cables with a wide range of electrical capabilities, optical capabilities, and strength capabilities can be readily manufactured to match the requirements of a particular application without necessitating expensive and lengthy development trials.

An important optical transmission problem, which is not addressed by any of the prior art cable inventions, has become evident during the past few years. A need has been recognized for the development of a fiber-optic cable having the capability to preserve optical phase and/or polarization data during the transmission from signal source points to remote monitoring (sink) points, while the cable is simultaneously subjected to high-stress towing environments and/or long-haul undersea applications. This need becomes especially acute when fiber-optic sensors systems and coherent fiber communication systems must operate in an undersea environment, since transmissions must be made from various depths, and particularly, from extreme depths to signal processors at sea level. A difficult problem associated with fiber optic sensor technology concerns the high degree of sensitivity of the "downlead" optical fiber (contained in the connecting cable), which must apparently be exposed to the environmental parameter to be measured. For example, in the case of fiber optic interferometric hydrophones, optical fiber leads are used to interconnect the undersea sensor array to a remote processing sink in order to eliminate need for optical-electronic conversion and the electrical transmission of collected data through long electro-mechanical (EM) cables. The latter EM cables have the disadvantage of insufficient bandwidth, excessive losses and/or excessive diameter and weight. On the other hand, use of polarization preserving fiber or special low birefringent fiber is usually unaffordable. Furthermore, it has not proved possible in hybrid fiber optic cable design which incorporates standard telecom fiber to protect the fiber from exposure to the undersea acoustic environment. Further, it is impossible, without installing special electro-optic filtering techniques in-line with the optical fiber, to prevent an increase in background phase noise induced by dynamic mechanical stresses associated with an operational tow cable environment. Therefore, a continuing need exists in the state of the art for a family of readily available and easily manufacturable, reduced diameter electro-opto-mechanical cables that incorporate one or a large number of optical fibers capable of preserving optical phase and/or polarization data transmitted through the fibers, while allowing design flexibility in the choice of electrical power transmission capability over a wide range of values, and providing the opportunity for custom adjustment of cable strength to withstand the physical demands of a wide range of particular undersea tow cable or a dynamic seafloor cable environments.

### Disclosure of the Invention

The present invention is directed to a fiber-optic transmission cable as defined in claim 1.

The present invention is concerned with providing a family of fiber-optic transmission cables for high stress and undersea submarine cable applications. The invention is an electro-opto-mechanical cable comprising a central, flexible composite electro-optic strand containing from one to many optical fibers in small-diametered, thin-walled steel tubes; wherein, the various possible options for construction of the electro-optic strand include: (1) a single steel tube containing fiber-optic/s centrally located coincident with the cable axis, (2) a central steel tube containing fiber-optic/s surrounded by various arrangements of electrical conductors, (3) a central steel tube containing fiber-optic/s surrounded by additional steel tube/s containing fiber-optic/s, (4) a central steel tube containing fiber-optics surrounded by a combination of variously arranged steel-tubed fiber-optic elements and/or electrical transmission elements. All of the above configurations for the electro-optic strand, which contain optical fiber/s within small-diametered, thin-walled steel tube/s, provide sufficient protection from externally imposed stresses on the optical fiber/s such that phase and/or polarization modulated optical data can be transmitted through the optical fiber/s. The central composite electro-optic strand is protected or insulated by an elastomeric and/or thermoplastic extrusion thereover, and receives further protection from one or several layers of metallic wire strength members served about the extrusion-jacketed electro-optic core. The metallic wire strength member is preferably void-filled with a suitable water-blocking material and optionally covered externally with an extruded thermoplastic and/or elastomeric extrusion jacket to provide an integral electro-opto-mechanical cable construction. This summary of the invention is further elaborated in the paragraphs below.

The central, flexible electro-optic strand configuration may contain in general a high fiber count (up to ∼100 or more optical fibers), and the various constructions intrinsically assure the transmission of low-noise phase and/or polarization modulated lightwave carrier data through the optical fibers, simultaneous with the possibility of electrical power transmission, while the cable is subjected to high stress physical and mechanical environments. A central thin-walled tubular member extends longitudinally in the axis of the cable and is made from certain metallic alloys having a resistance to radial inward deformation yet possessing a capability for longitudinal flexure. The central thin-walled member is shaped with an outer diameter equal to a multiple of about ten times the dimensions of its wall thickness and has a longitudinal welded seam to provide a hermetically sealed interior. At least one optical fiber is longitudinally disposed in the interior of the central thin walled tubular member, although a multitude, as many as twenty or more fibers could still be so disposed. A gel fills the interior of the central thin walled tubular member which contains the optical fibers to remove any voids therein and to provide mechanical coupling of the fiber to the inside of said metal tube. Typically a steel alloy material used for the central thin walled member prevents the transmission of sufficient heat to damage the optical fibers as the longitudinal welded seam is precisely created by a laser. An annular shaped dielectric region coaxially adjacent the central thin walled tubular member and at least one layer but preferably a pair of contrahelical, torque balanced layers of load bearing strands are disposed radially outwardly of the dielectric layer. Optionally, a served electrically conductive layer or several layers of round copper wires or shaped copper strands is interposed within the dielectric layer to provide for electrical power transfer throughout the length of the cable. Also, an elastomeric or thermoplastic extrusion jacket, typically a low, medium, or high density polyethylene compound, covers the preferred torque balanced layers of steel armor to help assure watertight integrity as well as presenting an abrasion resistant surface.

The central electro-optic strand may be constructed with additional thin-walled tubular members fashioned like the central thin-walled tubular member clustered about and extended longitudinally the full length of the cable in helical paths about the central thin-walled member. Additional optical fibers are provided in each of the additional thin-walled tubular members and each member containing fiber is provided with an appropriately calculated back twist during the helical stranding operation to assure the transmission of phase modulated optical data without introducing any phase distortion due to torsional stress in the fiber. A gel fills each additional thin walled tubular member to further reduce the possibilities of compromising the data content and to provide frictional coupling of the fibers to the cable structure. In another variation, several solid or stranded electrical conductors may be alternately interposed with the additional thin-walled tubular members, and all such elements having the same diameter, then clustered about the central thin-walled tubular member to obtain the ability to transmit electrical power and additional channels for optical data transmission throughout the length of the cable. Additional layers may be formed in analogous fashion to produce a multiple-layered, composite electro-optic strand. An additional conductive layer formed typically with served round copper wires, a braided copper shield, helically wrapped metallic tapes, or longitudinally formed metallic tube shielding, can be included in the dielectric region to function as a ground shield or as a return lead for electrical power and/or signal transmission.

### Advantages and Objects of the Invention

An important advantage and object of invention as compared to prior art is to provide an improved cable for the transmission of phase modulated optical data.

Another object is to provide an improved cable having a small-diametered, thin-wall steel alloy tube containing optical fibers and a void-fill gel for frictional coupling to assure transmission of phase modulated optical data through the fibers.

An object of the invention is to provide a cable with a small-diameter thin-walled steel alloy tube containing fiber optics and void filling gel that is hermetically sealed with a longitudinal weld without the creation of heat level that might otherwise damage the contained optical fibers.

Still another advantage of the invention is to provide a cable including at least one small-diametered thin-walled metallic tube in which fibers are protected from asymmetric transverse stress and radial compressions (that might alter the shape of the fibers and consequently alter their indexes of refraction), such that coherent optical phase and/or polarization data can be transmitted through the optical fiber/s without superimposed noise.

An additional advantage of the invention over prior art is that the family of cables described can be readily manufactured by a large number of cable vendors, due to the strength and stability of the laser-welded steel tube protecting the optical fibers during process operations on conventional cabling and extrusion machines.

Still another object is to provide an electro-opto-mechanical cable having the capability for transmitting phase modulated and/or polarized optical data along with electrical power through its central composite electro-optic strand.

Still another object is to provide for a cable having fiber optics contained in at least one thin-wall tubular member surrounded by an annular dielectric region and at least a pair of contrahelical, torque-balanced layers of load bearing strands.

A further advantage of this invention over prior art is the possibility of constructing composite electro-optic strand configurations that incorporate a large number of small-diametered steel tubes each containing a relatively large number of optical fibers, such that high fiber count cables ( ≥ ∼100 fibers) can be readily fabricated with an outer armor annulus of steel strength member wires within a small over-all diameter ( ≤ 12.7 mm).

Yet a further object is to provide a cable having the capability for transmitting phase modulated and/or polarization data which includes contrahelical, torque-balanced strength member windings to enable towing through the water.

A further object of the invention is to provide a cable having load bearing members to allow it to be towed through the water without compromising the effectiveness of digital optical and/or optical phase data signal transmissions through the optical fibers, while simultaneously including served, braided, or taped electrical conductors for the transmission of power to remote monitoring instrumentations, consequently providing a truly integrated electro-opto-mechanical cable construction.

Still further an object is to provide an integrated electro-opto-mechanical cable construction capable of providing electrical, optical, and mechanical functions simultaneously, which is suitable for deployment in an undersea environment.

A further object of the invention is to provide a cable having a coaxial thin-walled tube (containing at least one optical fiber), which is in general the central 'wire' of a composite electro-optic strand, surrounded by an annular shaped dielectric region, which is strengthened and protected by contrahelical torque-balanced load bearing strands that may be further protected by external extrusion jacketing, which features taken together have the capability to be stowed on a reel or in the hold of a ship for subsequent deployment without adversely affecting the optical data transmission.

Another object is to provide a small-diameter electro-opto-mechanical cable having an integrally extruded jacket and metallic load bearing layers in an outermost annular region protecting the electro-optic functions within, in order to achieve a ruggedness which resists the effects of abrasion, fishbite, and high tension cycling over small sheaves or overboarding chutes while minimizing residual (creep) strain due to sustained axial loading, thus providing truly integrated electro-opto-mechanical performance within a small-diameter, high specific gravity cable, which permits use on the seafloor for an optical submarine cable application.

Yet another advantage of the EOM cable invention as compared to prior art is protection of the optical fiber in the thin-walled steel tube containing one or many fibers and void-fill gel for frictional coupling of the fibers to the metal tube, such that the optical fiber or fibers cannot be driven into axial buckling due to axial compressive forces imposed upon the outer surface of the protective tube, which forces arise from mismatch of: (1) the temperature coefficient of expansion (contraction) of the polymeric materials extruded to protect the fiber, and (2) the temperature expansion (contraction) coefficient of the glass fiber itself. In all of the tight-buffer prior art constructions described earlier, there is a limit to the thickness of the annulus of plastic and/or elastomeric materials that may be extruded over the glass fiber. Since the temperature contraction of polymers is typically at least an order of magnitude greater than that of glass, the product of this contraction with the elastic modulus (E) and annular area (A) of the extruded polymer can easily "over-power" the similar product of the glass fiber's smaller contraction multiplied by the much smaller EA-product of the optical fiber. In effect, the optical fiber experiences only a small axial shrinkage when exposed to negative temperature gradients, and since its flexural rigidity is insufficient to support the opposing forces generated by the greater shrinkage of surrounding polymers, the glass fiber can be driven into axial buckling during processing at the cable plant. The axial buckling produces unacceptable discrete losses of optical power. The advantage of the steel tube is that its coefficient of expansion matches closely that of the glass fiber, and furthermore, the steel tube provides sufficient axial strength to support the opposing shrinkage forces generated by the polymeric extrusions surrounding the steel tubed fiber element.

To summarize an important advantage of the generic EOM cable construction as compared to prior art: the invention can be readily manufactured on conventional cabling machinery to produce a family of cables providing a wide range of electrical, optical, and mechanical performance properties that match the particular requirments of specific applications.

These and other objects of the invention will become more readily apparent from the ensuing specification, when taken in conjunction with the appended claims and drawings.

### Brief Descriptions of the Drawings

Figure 1 depicts a representative embodiment in cross- section of the cable for transmitting phase and/or polarization modulated data.

Figure 1a shows a variation of figure 1.

Figures 2 and 2a show variations of this inventive concept.

Figure 3 shows a cross-sectional view of another embodiment of the cable that assures transmission of optical phase and/or polarized modulated data.

Figure 3a shows a variation of Figure 3.

Figure 3b depicts a variation that enhances coilability.

### Description of the preferred embodiments

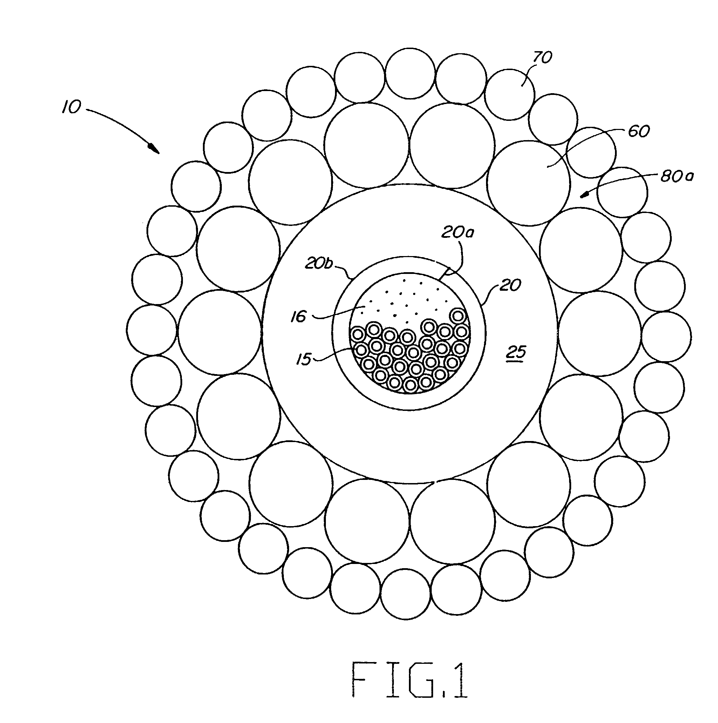

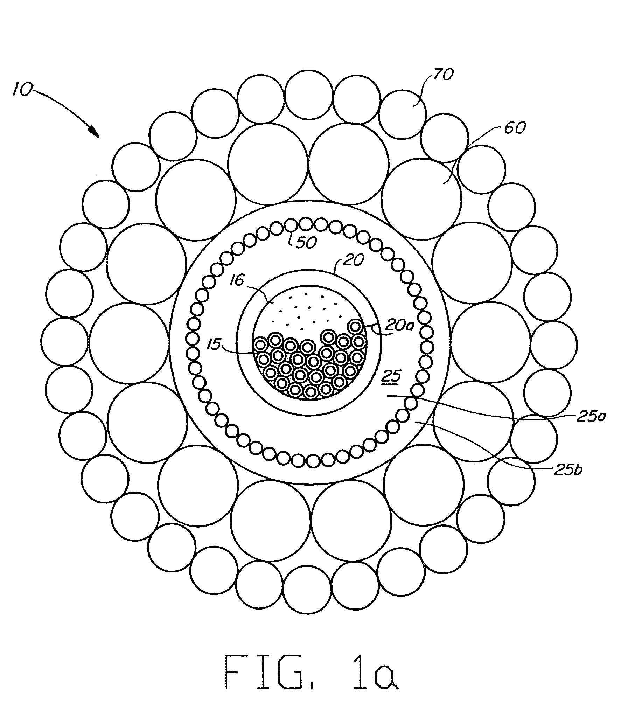

Referring now to the drawings, Figures 1, 2, and 3 show respectively cables 10, 10', and 10" specifically designed to assure the transmission of optical phase modulated and/or polarization data over long distances. These designs and their variations provide a sufficiently static environment for one or more single-mode fibers in the context of static or dynamic tow operations to allow detection of optical phase data and polarization data. Reduction in phase noise as compared to a conventional hydrid fiber optic cable construction has been verified. The electro-opto-mechanical (EOM) cable invention avoided most problems associated with previous designs and provided a heretofore unrealized optical data capability.

An interferometric fiber optic hydrophone array is connected to one end of a cable and the other end of the cable is secured to a towing vessel. Usually phase coherent light is launched from a laser source and transmitted to the optical fiber forming an interferometric sensor in the array. Light is appropriately modulated by an impinging acoustic signal and is returned from the modulation zone via another fiber to be detected. Since the signal imposed phase modulation occurs by means of optical path length changes that result from axial strain in the fiber sensor, any additional changes in strain in the lead fiber cable will also engender optical path length differences. Another factor to consider is that the distribution of radial compressive stress on the lead fiber in the tow cable generates random dynamic deformation of the fiber refractive index ellipsoid. Dynamic radial compressive forces arise from armor squeeze, the combined effect of Poisson's ratio and radial components of the helical steel wire stress associated with fluctuations in cable tension.

Depending on the cable geometry itself, in particular, the location of fibers with respect to the adjacent components, internal compressive forces on the fiber will be either symmetric or asymmetric. In the former, refractive index changes will not be catastrophic with respect to phase demodulation. In the case of dynamic transverse compressive strain, the fiber will be deformed into elliptical cross-sections with dynamically changing eccentricities. The corresponding changes in refractive index induce a dynamic state of polarization in the transmitted light (dynamic stress birefringence). These strain induced phase noises superimposed upon phase data in the tow cable fiber constitute the lead-sensitivity problem avoided by the design of the cables of this invention.

If an all-fiber Mach-Zehnder interferometer configuration is deployed for either a towed or static application, the fiber interferometer has equal signal and reference arms to minimize the effects of laser diode phase noise. With homodyne detection, the required quadrature bias (90 percent imbalance) is maintained by modulation feedback voltage to a reference piezoelectric cylinder used in recovering the impinging acoustic signals. The impinging acoustic energy imparts a phase modulation to the light, which is the quantity of interest to instrumentation on a remote signal processing site or onboard the towing platform.

Unwanted optical phase shifts can be induced in both the reference and sensor arms of the interferometer and the lead fiber connected to the remote sensor due to changes in the optical path length of light propagating through a particular segment of fiber. The basic birefringence changing mechanisms that could impose stresses on the individual fibers in the cable environment include not only mechanical stresses but also temperature stresses, magnetic field and electric field stresses. Of these stresses the mechanical stresses generated by external cable loading predominates in the towing situation.

A thorough analysis of the stresses and problems associated with cable designs for undersea operations in particular is set out in detail in the article entitled "Cable design approach for partial solution of lead sensitivity problems in undersea fiber optic sensor systems", T.C. Stamnitz, PROC.INT'L.SYMP.TECH.OPTO-ELECTRONICS: Optical Devices in Adverse Environments, SPIE/ANRT, Cannes, France, 19 Nov 1987 (11 pages).

Because of the considerations outlined above and thoroughly covered in the cited article, it is obvious that the optical fibers in a cable must be protected from asymmetrical transverse stress. In addition, reduction of fiber axial elongation to the lowest possible level is desirable for minimal fiber fatigue degradation and improved fiber cable life. As the consequence, the cable designs 10, 10′ and 10˝ evolved and can be built in continuous lengths of 10 to 100 kilometers, but may be fabricated from a number of smaller segments appropriately spliced together.

A number of single mode fibers 15 is located substantially coincident with cable axis. The exact selection of single mode fibers having the desired transmission properties for long-haul, high-data rate transmission can be made in accordance with various operating conditions. Some considerations in making a selection might include avoidance of microbending loss associated with the buffer package, pure bending loss associated with cable deployment and retrieval operations, splice losses due to core offset, etc. Other factors for fiber selection might include the required repeater spacing and the bit rate. In view of the present availability of a large variety of single-mode fibers from a relatively large number of different manufacturers, many fibers could be used once the parameters of the sensing system, monitoring circuitry, deployment mode and the like are considered in a given application and under given operational conditions. The optimum parameters for the single-mode fiber structure, such as core radius and index difference, must be determined for each situation, since optical performance characteristics depend upon the fibers opto-geometric parameters in a complicated manner. Trade-offs with respect to the performance requirements must be made. For example, a high index difference will provide a relative insensitivity to bending and microbending loss but induces at the same time relatively greater intrinsic loss. Similarly, control of the fiber index profile provides control over fiber dispersion at given wavelengths, which determines maximum data rates at these wavelengths. In the final analysis, the success of optical data transmission in a given cable in accordance with this invention will depend upon proper choice of opto-geometric parameters in the fiber. It must be pointed out that this invention provides, however, due to the configuration and arrangement of other elements to be described, a considerable number of fibers. Over a hundred may be included by having up to twenty-four fibers 15 in a given thin-walled tubular member 20.

The small-diameter thin-walled tubular member 20 is preferably an alloy such as stainless steel type 304, 316, Inconel 625 or titanium. The walls of the tubular member are thin, typically having a wall thickness of 0.05 to 0.10 mm, and about 0.15 or 0.20 mm maximum. The tubular members are typically sized between 0.75 to 1.75 mm over-all diameter (OD). These dimensions provide a rather spacious interior for a number of fibers 15 and the remaining void space in the tube interior is filled with a thixotropic gel 16, which is sufficiently viscoelastic to prevent water from flowing axially through the interior of the tube in the event of cable severing. Inclusion of the gel in addition to preventing any damage to the optics or end equipment, provides sufficient viscosity to effect frictional coupling of the fibers to the thin-walled tubular member.

The tubular members encasing the fibers are fabricated in accordance with processes disclosed by H.E. Karlinski in U.S. Patent #4,759,487 (7/26/87), which establishes the apparatus and method for forming the steel alloy tubes from flat metal tapes, injecting the optical fibers and gel-fill, laser welding the tube seam to obtain an hermetic seal, and reducing the latter to size.

A steel alloy tubular member having a 0.81 mm OD is made from a 0.05-0.075 mm wall thickness stainless steel stock and a 1.65 mm OD tubular member may be fabricated from 0.10-0.127 mm stock. These relative dimensions present a strong enough design to resist radially converging forces while allowing longitudinal flexibility, such that the cable can be stowed on a reel for later deployment over sheaves. Obviously, different diameters can be fabricated in accordance with methods of the cited patents, however, it was found that a diameter approximately equal to ten times the wall thickness provided sufficient crush resistance and sufficient longitudinal flexibility. The thin-walled tube designs protect the fibers from asymmetrical radial compression which would deform the shape of the fiber itself, and consequently, alter the fiber's index of refraction. lt is this protection from shape deformation that assures the possibility of transmitting coherent optical phase data. The thin-walled steel alloy construction permits the precise application of a laser weld 20a longitudinally to hermetically seal the interior and provide a strong nearly integral protection for the fibers therein. The precision laser welding of the thin-walled steel alloy will not damage the fibers nor the void-fill gel during the fabrication process. This fact differs from results obtained with more highly heat conductive copper or copper alloy tubes that conduct excess heat away from the weld area to inflict damage upon the optical fibers.

In laser welding of tubular members 20 constructed of a steel alloy material, the heat remains predominantly in the vicinity of the weld by passing through the laser beam quickly ( ≥ 25 m/sec). Hence, the fibers are not damaged in fabricating the specifically designed thin-walled tubular members 20.

The selection of the steel alloy tube also satisfies other design considerations of the cable. The elastic modulus of steel assures a strong, stable tube that can be handled and processed on conventional equipment at a cable plant without buckling. The elastic range of ∼0.55% axial strain for the steel alloy is commensurate with the expected operational strain in this cable invention. The cable of this invention is specifically designed in accordance with features described below to provide low axial strain (∼0.25%) at the working load, and low residual strain from creep (≤ 0.15%). The thin-wall metal tube design facilitates the longitudinal laser weld 20a by reducing the total amount of heat needed to obtain seam fusion. In consequence of all of the above the enclosed fibers and gel are not disturbed, such that the gel provdes frictional coupling for the fiber and the fiber functions without the risk of water flowing through the tube interior.

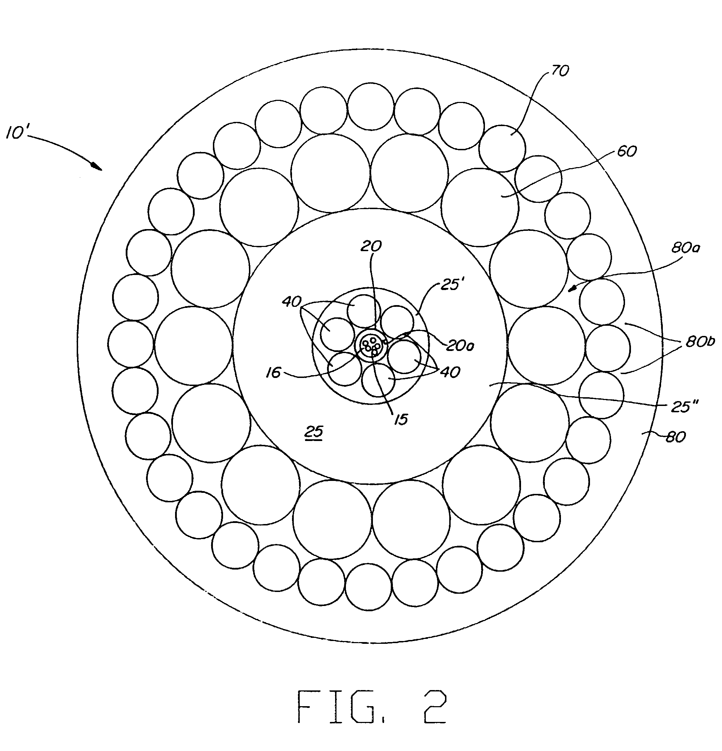

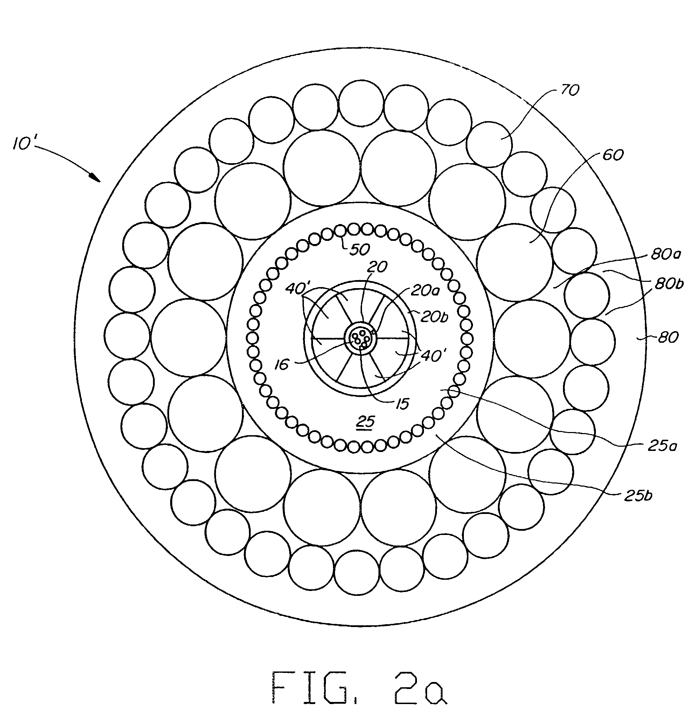

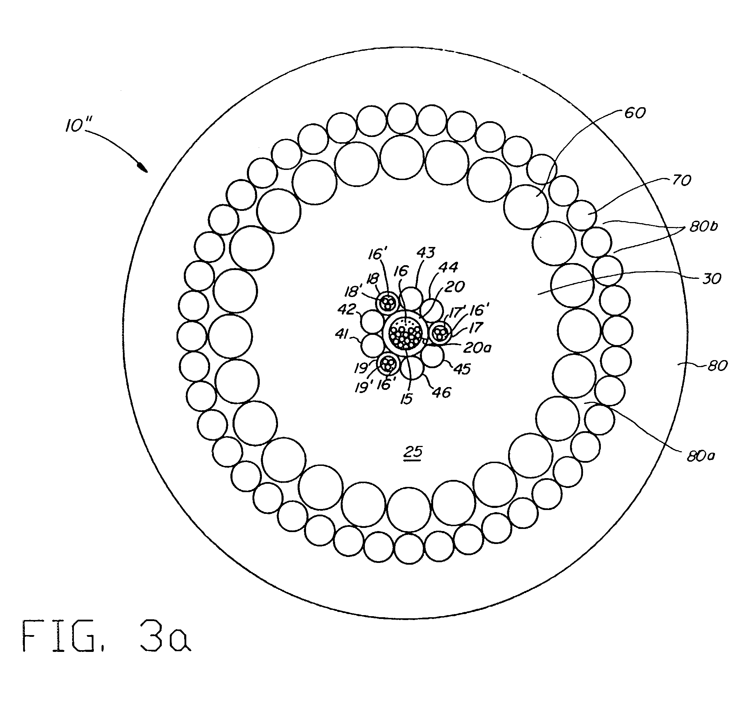

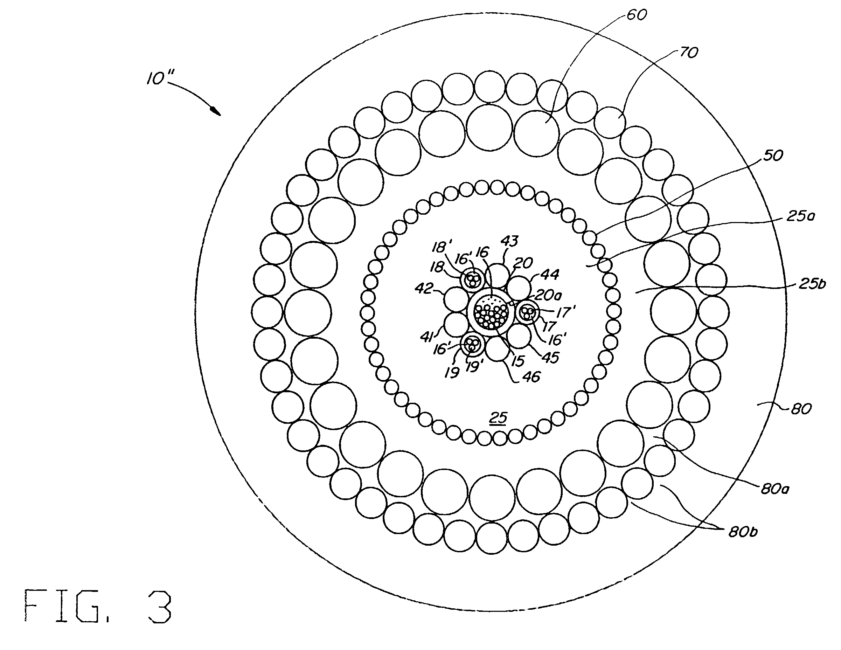

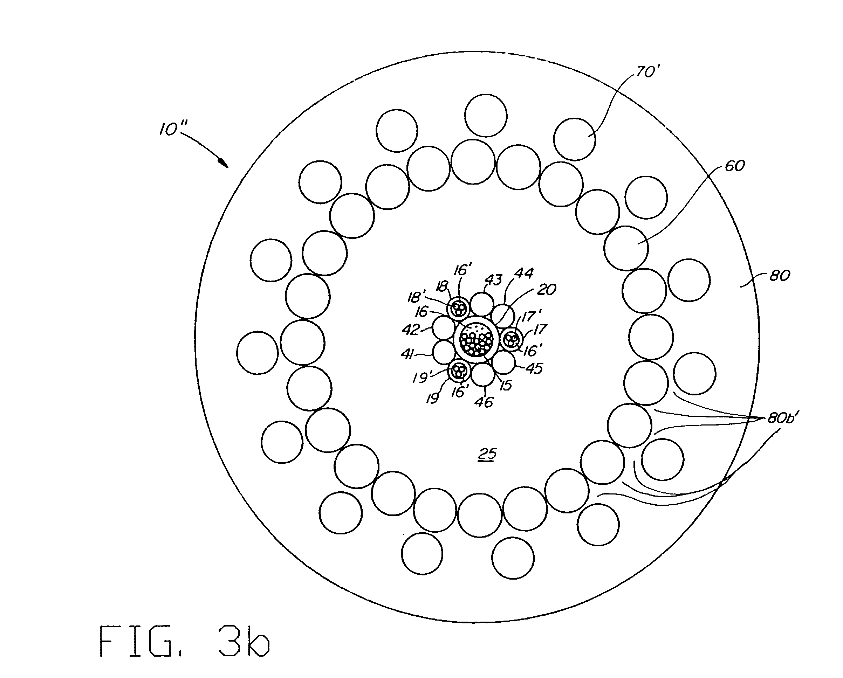

Noting Figures 1 and 1a, an extruded dielectric region 25 contiguously abuts the outer surface of the metal tube 20. In Fig. 1a extruded dielectric region 25 has two sections, an inner section 25a and an outer section 25b, which sandwich an interposed served electrically conductive layer 50 which is described below. This same type extrusion is shown also in Figs. 2a and 3. In Fig. 2 dielectric region 25 includes a strand shield portion 25′ of a semi-conductive material such as semi-conductive ethylene-propylene copolymer and a second portion 25˝ of an insulative material such as medium-density polyethylene. Other materials can be used as well. The extrusion processes are in accordance with standard techniques in wire and cable fabrication. Noting Figure 2a, an adhesive 20b optionally can be co-extruded or extruded in tandem directly over the central E-O element and beneath the dielectric region when the latter would otherwise contact a smooth outer surface of the E-O element to be covered. All of these disclosed configurations of the dielectric region have various advantages in the context of given cable performance requirements. The disclosed dielectric region configurations could be interchanged with the disclosed embodiments as a matter of design choice.

The heat normally attendant from such extrusion pocesses does not pose a threat to the integrity of the longitudinal welds 20a in the thin-walled tubing member. The materials chosen for the dielectric regions have been proven to provide excellent dielectric properties and very low moisture absorption and transmission. In addition to providing a desirable degree of electrical protection the dielectric regions protect the tube itself from corrosion and further buffer the internally carried fibers from distorting influences.

A served conductive layer 50 may be added as in Figures 1a, 2a, and 3 to give an electrical power and signal transfer capability, as required. The served electrical conductor layer 50 may be included in the designs to act as a ground shield or an electrical power return or may function as a second coaxial conductor to provide a shield for coaxial electrical data transmission. A pair of load bearing layers of wire strands 60 and 70 may complete a particular cable configuration. Optionally, Fig.3b shows that alternate strands of layer 70′ are deleted so that this layer can function as a spaced armor with about forty to seventy percent coverage. This reduces the torsional rigidity of the cable by providing the capability to absorb residual torsional stresses that arise in the cable due to the twisting that necessarily accompanies coiling of the cable into the holding tank of a cable laying ship. This modification can apply to the other disclosed embodiments, although this feature has not been shown in the other embodiments to avoid belaboring the obvious.

The embodiments of figures 2 and 2a include some of the same elements as shown for figures 1 and 1a. However, a plurality of served electrical conductors 40 are clustered about thin-walled tubular member 20 and longitudinally extend in a helical path in Fig. 2. As a variation, Fig. 2a displays shaped copper segments 40′ that are stranded to fill an annulus about tubular member 20. In the embodiments of Fig. 2 the dielectric region 25 is made up of a semi-conductive strand shield portion 25′ and a medium-density polyethylene insulative portion 25˝. In Fig. 2a an adhesive 20b is coated over the outer surface of the shaped copper segments 40′ to adhere section 25 thereto for the purpose of shear transfer during cable cycling under tension. The embodiments of Figs. 3, 3a, and 3b show additional elements disposed in the extruded dielectric region 25 that gives this cable an enhanced electo-optic capability that might be useful when sensor requirements are expanded. Three additional thin-walled tubular members 17, 18, and 19 are shown disposed in an annulus about the central thin-walled tubular member 20. These additional members each contain additional fibers 17′, 18′, and 19′ provided also with the void filling gel 16′ and give the cable an increased optical channel capacity. Interspersed with the additional members are pairs of served electrical conductors 41-46. These are disposed in the same annulus as the additional thin-walled tubular members to give the cable a capability for transmitting power to various remote undersea repeaters, sensors, or other instrumentation as may arise. The three additional tubular members disclosed are not to be considered as restrictive on this inventive concept. Other ratios of the number of additional thin-wall tubular members to the number of additional electrical conductors can be selected as required.

Preferably, in Figs. 3, 3a, and 3b, the dielectric region 25 fills the interstices around the additional tubular and electrical conductors to fill the cable interior and to provide mechanical coupling for the purpose of shear transfer.

As mentioned above, served electrically conductive layer 50 is included in the dielectric region of Fig. 3 to provide for a return lead or for additional transmission of electrical power as well as providing a degree of electronic shielding should it be necessary. The electrically conductive layer 50 can also be used in conjunction with the served electrical conductors 41-46 to provide a coaxial element for electrical data transmission.

A jacket 80 is provided as needed to protect the wires from point loading or strength degradation due to corrosion. An elastomeric filling compound 80a fills all interstices between adjacent wires and layers as required.

The served electrical conductors and the additional thin-walled tubular members which are clustered about the central thin walled tubular member longitudinally extend in a helical path about the central thin walled tubular member. The additional optical fibers 17′ 18′ and 19′ are each provided with an appropriately calculated back-twist to assure that torsional stress is not generated, which might otherwise compromise their phase modulated optical data transmission capability. This back-twist can be readily accomplished by methods well known to those skilled in the art to which this invention pertains.

At least two layers 60 and 70 of contrahelical, torque-balanced steel armor wires are located radially outwardly from the extruded annular dielectric region 25. Technical principles derived from physical laws using mathematical physics are used to determine the configuration of the double-steel armor layers as required to create an essentially torque-free cable that insures low cable rotation. A low magnitude of cable rotation, in general, produces a low displacement along the axis of the cable, and reduces the liklihood of cable loop formation, which may lead to cable kinking or hockling phenomena during deep-sea deployment or recovery operations. Employing the force equilibrium equation and the equilibrium equation for force moments about the cable axis (induced by axial cable loading) and setting the resultants to zero, the size and number of wires in each of the two layers is determined by exact solution of a third order equation using Cardan's formula. The exact theoretical analysis can be relied upon to determine a given multiple layer armor design as set forth in the Stamnitz paper referenced above, so that the size and number of wires in each layer are precisely determined.

The manufacture of this cable invention requires the fabrication of thin-walled tubular members in general accordance with the technique disclosed in Karlinski's earlier cited U.S. Patent (#4,759,487), which describes the method for including the desired number of single-mode optical fibers in the interior of the thin-walled tubular member (multi-mode fibers could be used however they are inappropriate for the transmission of phase coherent data). A thixotropic jel filling compound can simultaneously be flowed into the cylindrical enclosure while the tube is laser welded longitudinally to hermetically seal the seam to protect the interior contents from the external surroundings. This welding operation requires precision manufacturing apparatus and methods to prevent compromising the tube strength and to prevent damage to the optical fibers carried within.

The polyethylene dielectric 25 extruded over the tubular member does not present any problems in practice, since the laser weld produces complete closure of the metal tube seam. The extrusion of the high-density polyethylene having a temperature profile of about 500 degrees Fahrenheit does not produce sufficient "heat-mass" to disturb the laser welded seam on the thin-walled tubular member. The double-steel armor layers are appropriately mounted on the dielectric extrusion, while simultaneously filling with an elastomeric compound 80a both inner and outer interstices of all spaces that would otherwise be left void between adjacent armor wires in the same layers or in successive layers. The final jacket of high-density polyethylene 80 or an equivalent plastic or elastomer is pressure extruded to fill the outer interstices of the armor wires with portions 80b in the outermost strand layer, see for example, Figs. 2, 2a, 3, and 3a, and to cover the entire cable to provide mechanical coupling for the purpose of shear transfer. The integral nature of the outer jacket and the outer armor layer makes the cable even more impervious to the ambient operational effects; i.e., abrasion, temperature changes, hydrostatic pressure, etc.

The "spaced armor" provided by layer 70′ in the embodiment of Fig. 3b has portions 80b′ of the extruded jacket 80 filling the spaces between adjacent steel strands. This gives the cable a mechanical coupling of the jacket to the rest of the cable and reduces the cable torsional rigidity to allow cable coilability without loop formation or hockling. The load bearing strands in the spaced armor construction are supposed to be fabricated in a circumferentially symmetric arrangement with adjacent strands equidistantly spaced apart to provide partial coverage of the underlying layer of load bearing metallic strands. In actual practice, it is ordinarily difficult to maintain the precise equidistant spacing; hence, the latter is a design goal.

Obviously, many modifications and variations of the present invention are possible in light of the above teachings it is therefore to be understood that within the scope of the appended claims, the invention may be practiced otherwise than specifically described.

## Claims

1. A fiber-optic transmission cable (10) comprising one to a large number of physically and mechanically protected optical fibers and load-bearing strength member elements comprising:
a central tubular member (20) longitudinally extending coincident in the axis of the cable with the tubular member made from a material having a compressive strength to resist radial inward deformation;
at least one optical fiber (15) longitudinally disposed in the interior of the central tubular member;
a gel (16) filling said interior of the central tubular member containing said at least one optical fiber therein to remove any voids;
an annular shaped dielectric region (25) outwardly coaxial and adjacent said central tubular member; and
at least one layer of load-bearing metallic strands (60) disposed outwardly of the dielectric region (25) ; and characterised in that:
said central tubular member (20) is small-diametered and thin-walled, and is shaped with an outer diameter equal to a multiple of about ten to sixteen and one-half times the dimensions of its wall thickness to inhibit signal loss due to dynamic stress birefringence;
said central tubular member (20) has a single longitudinal welded seam (20a) to provide an integral construction with a hermetically sealed interior;
said gel (16) filling said interior of the central tubular member (20) provides mechanical coupling between said at least one optical fiber (15) and the interior of said central thin-walled tubular member (20) therein; and
said at least one layer of load-bearing metallic strands (60) is disposed immediately outwardly of and contiguous to said dielectric region (25).

2. A fiber-optic transmission cable (10) comprising one to a large number of physically and mechanically protected optic fibers (15) and a load-bearing strength member (60) as characterised in Claim 1, and further characterised in that: said central small-diametered and thin-walled tubular member (20) is a steel alloy material having the property and dimensions to prevent the transmission of sufficient heat to cause damage to said at least one optical fiber as said single longitudinal welded seam in said central thin walled tubular member is precisely created by precision laser welding; and said at least one layer of load-bearing metallic strands (60) comprises at lease one pair of contrahelical layers of load-bearing metallic strands (60,70).

3. A fiber-optic transmission cable (10, 10', or 10'') comprising one to a large number of physically and mechanically protected optical fibers (15) and load-bearing strength member elements (60,70) as characterised in Claim 2, and further characterised in that:
a served electrically conductive layer (50) is interposed in the annular shaped dielectric region (25) longitudinally extending coaxially about said central thin-walled tubular member (20);
an elastomeric compound (80a) is disposed between at least adjacent layers of load bearing strands (60,70) filling both inner and outer interstices associated with the layers; and
a pressure extruded external jacket (80) fills all outer intersticial spaces between adjacent metallic strands in the outermost layer (70) and covers the nearly torque-balanced layers, said served electrically conductive layer, and said central thin-walled tubular member with said at least one optical fiber provides an integrated electro-opto-mechanical cable structure.

4. A fiber-optic transmission cable (10') comprising one to a large number of physically and mechanically protected optical fibers (15) and load-bearing strength member elements (60,70) as characterised in Claim 2 or 3, further characterised by:
a plurality of served copper strands (40 or 40') clustered about, longitudinally extending in a helical path about, and spaced from said central thin-walled tubular member (20), said served copper strands (50), said annular shaped dielectric region (25), said thin-walled tubular member (20) with said at least one optical fiber (15) and said near torque-balanced layers (60,70) providing an integrated electro-opto-mechanical cable structure.

5. A fiber-optic transmission cable (10'') comprising one to a large number of physically and mechanically protected optical fibers (15) and load-bearing strength member elements (60,70) as characterised in Claim 2, 3, or 4, further characterised by:
at least one additional thin-walled tubular member (17, 18, or 19) having the same components as said central thin-walled tubular member (20) and clustered about and longitudinally extending in a helical path about said central thin-walled tubular member;
at least one additional optical fiber (17', 18', or 19') longitudinally extending in each said additional thin-walled tubular member (17, 18, or 19) each provided with an appropriately calculated back-twist to offset the torsional stress induced in fabricating said helical path in each said additional optical fiber (17', 18', or 19') and to assure said transmitting optical data with low dynamic stress birefringence;
a gel (16') filling each said additional thin-walled tubular member (17, 18, 19); and
at least one served electrical conductor (41,42,43,44,45, or 46) clustered about and longitudinally extending in a helical path about said central thin-walled tubular member (20), said annular shaped dielectric region (25) being pressure extruded to assure covering said at least one additional thin-walled tubular member (17, 18, or 19) and said at least one served electrical conductor (41,42,43,44,45, or 46) such that the dielectric fills the outer interstices of the helically extending tubular members (17,18,19) and electrical conductors (41,42,43,44,45, or 46)

6. A fiber-optic transmission cable (10'') comprising one to a large number of physically and mechanically protected optical fibers and load-bearing strength member elements as characterised in Claim 5, further characterised in that each said at least one additional thin-walled tubular member (17, 18, or 19) is alternated in a desired ratio with each said at least one served electrical conductor (41,42,43,44,45, or 46) in an annulus clustered about and longitudinally extending in said helical path about said central thin-walled tubular member (20).

7. A fiber-optic transmission cable (10') comprising one to a large number of physically and mechanically protected optical fibers and load-bearing strength member elements as characterised in Claim 4, further characterised in that each said annular shaped dielectric region (25) has a semi-conductive strand shield (25') directly in contact with said at least one served electrical conductor (40) and said strand shield fills the outermost interstices of adjacent conductors and an insulative annulus (25) is disposed over and adjacent to and in intimate contact with said semi-conductive strand shield (25').

8. A fiber-optic transmission cable (10'') comprising one to a large number of physically and mechanically protected optical fibers and load-bearing strength member elements as characterised in Claim 5, further characterised in that each said annular shaped dielectric region (25) has a semi-conductive strand shield (25') directly in contact with said at least one served electrical conductor (41,42,43,44,45, or 46) and said at least one additional thin-walled tubular member (17,18,19) and said strand shield (25') filling the outer interstices between said members, and an insulative annulus (25) is disposed adjacent to, over, and in intimate contact with said semi-conductive strand shield (25').

9. A fiber-optic transmission cable (10) comprising one to a large number of physically and mechanically protected optical fibers and load-bearing strength member elements as characterised in Claim 1, further characterised by:
an adhesive polymer bonding material (20b) disposed on said central thin-walled tubular member (20) to bond the annular shaped dielectric region (25) thereto to provide an integral electro-opto-mechanical structure.

10. A fiber-optic transmission cable (10'') comprising one to a large number of physically and mechanically protected optical fibers and load-bearing strength member elements as characterised in Claim 1, 2, 3, or 4, further characterised in that the outer layer of load-bearing metallic strands (70') is configured in a circumferentially symmetric arrangement with adjacent strands equidistantly spaced apart to provide partial coverage of the underlying layer of load-bearing metallic strands (60).

11. A fiber-optic transmission cable (10, 10',10'') comprising one to a large number of physically and mechanically protected optical fibers and load-bearing strength member elements as characterised in any one of the preceding claims, characterised in that said central tubular member (20) is shaped with an outer diameter of between 0.75 mm and 3.2 mm.

12. A fiber-optic transmission cable (10'') comprising one to a large number of physically and mechanically protected optical fibers and load-bearing strength member elements as characterised in Claim 2 or 3, further characterised by:
at least one additional thin-walled tubular member (17,18, 19) fashioned like said central thin-walled tubular member (20) and clustered about and longitudinally extending in a helical path about said central thin-walled tubular member (20);
at least one additional optical fiber (17',18',19') longitudinally extending in each said additional thin-walled tubular member (17,18,19) each provided with an appropriately calculated back-twist to offset the torsional stress induced in fabricating said helical path in each said additional optical fiber (17',18',19') and to assure said transmitting optical data with reduced dynamic stress birefringence;
a gel (16') filling each said additional thin-walled tubular member (17,18,19);
at least one served electrical conductor (41,42,43,44,45,46) clustered about and longitudinally extending in a helical path about said central thin-walled tubular member (20);
said annular shaped dielectric region (25) being pressure extruded to assure covering said at least one additional thin-walled tubular member (17,18,19) and said at least one served electrical conductor (41,42,43,44,45,46) such that the dielectric fills the outer interstices of the helically extending tubular members and electrical conductors and in which the outer layer of load-bearing metallic strands (70') is fabricated in a circumferentially symmetric arrangement with adjacent strands equidistantly spaced apart to provide partial coverage of the underlying layer (60) of load-bearing metallic strands.

13. A fiber-optic transmission cable (10') comprising one to a large number of physically and mechanically protected optical fibers and load-bearing strength member elements as characterised in Claim 4, further characterised by:
an adhesive polymer bonding material (20b) disposed on outer surfaces of said at least one served electrical conductor to bond the annular dielectric region (25) thereto to provide an integral electro-opto-mechanical structure.

14. The use of a fiber-optic transmission cable (10,10',10'') as characterised in any one of Claims 1-13 to transmit optical data in an undersea environment, which includes: towing of various array apparatus or instrumentations attached to the cable, or the operation of a remote-operated-vehicle at the end of the cable, or the achievement of undersea communications or sensor data collection by means of the cable.

15. The use of a fiber-optic transmission cable (10, 10',10'') as characterised in Claim 14 and further characterised in that the optical data transmission includes low-noise phase-modulated data transmission or optical data transmissions with low dynamic stress birefringence in said undersea applications.

## Patentansprüche

1. Lichtleitfaser-Übertragungskabel (10) mit einer bis zu einer großen Anzahl physisch und mechanisch geschützter Lichtleitfasern und tragender Widerstandselemente, wobei das Kabel folgendes umfaßt:
ein zentrales Röhrenelement (20), das sich der Länge nach mit der Achse des Kabels zusammenfallend erstreckt, wobei das Röhrenelement aus einem Werkstoff mit einer entsprechenden Druckfestigkeit gestaltet ist, um einer radialen Verformung nach innen zu widerstehen;
mindestens eine Lichtleitfaser (15), die sich der Länge nach in dem Inneren des zentralen Röhrenelements befindet;
ein Gel (16), das das Innere des zentralen Röhrenelements ausfüllt, das darin mindestens eine Lichtleitfaser aufweist, so daß etwaige Hohlräume entfernt werden;
einen ringförmigen dielektrischen Bereich (25), der nach außen koaxial ist und der sich neben dem zentralen Röhrenelement befindet; und
mindestens eine Schicht tragender Metallitzen (60), die sich außerhalb des dielektrischen Bereichs (25) befinden, und dadurch gekennzeichnet, daß:
das genannte zentrale Röhrenelement (20) einen geringen Durchmesser aufweist, dünnwandig ist und mit einem Außendurchmesser ausgebildet ist, der etwa dem Zehn- bis Sechzehneinhalbfachen der Dimensionen dessen Wanddicke entspricht, so daß ein Signalverlust aufgrund von Doppelbrechungen durch dynamische Beanspruchung verhindert werden;
das genannte zentrale Röhrenelement (20) eine einzelne, longitudinale Schweißnaht (20a) aufweist, um eine integrale Konstruktion mit einem luftdicht verschlossenen Innenraum vorzusehen;
das den Innenraum des zentralen Röhrenelements (20) füllende Gel (16) eine mechanische Kopplung zwischen der genannten mindestens einen Lichtleitfaser (15) und dem Inneren des zentralen, dünnwandigen Röhrenelements (20) darin vorsieht; und daß
die genannte mindestens eine Schicht tragender Metallitzen (60) direkt außerhalb und angrenzend an den dielektrischen Bereich (25) angeordnet ist.

2. Lichtleitfaser-Übertragungskabel (10) mit einer bis zu einer großen Anzahl physisch und mechanisch geschützter Lichtleitfasern (15) und tragender Widerstandselemente (60) nach Anspruch 1, ferner dadurch gekennzeichnet, daß: es sich bei dem genannten dünnwandigen Röhrenelement (20) mit geringem Durchmesser um einen Stahllegierungswerkstoff handelt, der die entsprechenden Eigenschaften und Abmessungen aufweist, um die Übertragung von ausreichender Wärme zu verhindern, die eine Beschädigung der genannten mindestens einen Lichtleitfaser verursacht, wobei die genannte einzelne, longitudinale Schweißnaht in dem zentralen, dünnwändigen Röhrenelement durch Präzisionslaserschweißen präzsionsgenau erzeugt wird; und wobei die genannte mindestens eine Schicht tragender Metallitzen (60) mindestens ein Paar konträr spiralförmiger Schichten tragender Metallitzen (60, 70) umfaßt.

3. Lichtleitfaser-Übertragungskabel (10, 10' bzw. 10'') mit einer bis zu einer großen Anzahl physisch und mechanisch geschützter Lichtleitfasern (15) und tragender Widerstandselemente (60, 70) nach Anspruch 2, ferner dadurch gekennzeichnet, daß:
sich in dem ringförmigen dielektrischen Bereich (25) eine umhüllte, elektrisch leitfähige Schicht (50) befindet, die sich longitudinal koaxial um das genannte dünnwandige, zentrale Röhrenelement (20) erstreckt;
sich mindestens zwischen benachbarten Schichten tragender Litzen (60, 70) eine elastomere Verbindung (80a) befindet, die sowohl die inneren als auch die äußeren kleinen Zwischenräume füllt, die den Schichten zugeordnet sind; und daß
eine druckgespritzte, externe Umhüllung (80) alle äußeren Zwischenräume zwischen benachbarten Metallitzen in der äußersten Schicht (70) füllt und die Schichten mit beinahem Torsionsausgleich bedeckt, wobei die genannte umhüllte, elektrisch leitfähige Schicht und das genannte dünnwandige, zentrale Röhrenelement mit der genannten mindestens einen Lichtleitfaser eine integrierte elektrooptisch-mechanische Kabelkonstruktion vorsieht.

4. Lichtleitfaser-Übertragungskabel (10') mit einer bis zu einer großen Anzahl physisch und mechanisch geschützter Lichtleitfasern (15) und tragender Widerstandselemente (60, 70) nach Anspruch 2 oder 3, ferner dadurch gekennzeichnet, daß:
eine Mehrzahl umhüllter Kupferlitzen (40 bzw. 40') um das zentrale, dünnwandige Röhrenelement (20) gebündelt und beabstandet zu diesem Element angeordnet ist, und wobei sich die Mehrzahl von Kupferlitzen longitudinal spiralförmig um das zentrale Röhrenelement erstreckt, wobei die umhüllten Kupferlitzen (50), der genannte ringförmige dielektrische Bereich (25), das dünnwandige Röhrenelement (20) mit der genannten mindestens einen Lichtleitfaser (15) und die Schichten (60, 70) mit beinahem Torsionsausgleich, eine integrierte elektrooptisch-mechanische Kabelkonstruktion vorsehen.

5. Lichtleitfaser-Übertragungskabel (10'') mit einer bis zu einer großen Anzahl physisch und mechanisch geschützter Lichtleitfasern (15) und tragender Widerstandselemente (60, 70) nach Anspruch 2, 3 oder 4, ferner gekennzeichnet durch:
mindestens ein zusätzliches dünnwandiges Röhrenelement (17, 18 bzw. 19) mit den gleichen Bestandteilen wie das genannte dünnwandige, zentrale Röhrenelement (20), das um das genannte dünnwandige, zentrale Röhrenelement gebündelt ist und das sich longitudinal spiralförmig um das zentrale Röhrenelement erstreckt;
mindestens eine zusätzliche Lichtleitfaser (17', 18' bzw. 19'), die sich in jedem der genannten zusätzlichen dünnwandigen Röhrenelemente (17, 18 bzw. 19) der Länge nach erstreckt, und wobei jede Faser mit einer entsprechend berechneten Rückdrehung versehen ist, um die bei der Herstellung des spiralförmigen Wegs in jeder zusätzlichen Lichtleitfaser (17', 18' bzw. 19') induzierte Drehspannung zu versetzen, und um die Übertragung der optischen Daten mit geringen Doppelbrechungen durch dynamische Beanspruchung zu gewährleisten; und
ein Gel (16'), das jedes zusätzliche dünnwandige Röhrenelement (17, 18, 19) füllt; und
mindestens einen umhüllten elektrischen Leiter (41, 42, 43, 44, 45 bzw. 46), der um das genannte dünnwandige, zentrale Röhrenelement (20) gebündelt ist und der sich longitudinal spiralförmig um das zentrale Röhrenelement erstreckt, wobei der genannte ringförmige dielektrische Bereich (25) druckgespritzt wird, um die Abdeckung des mindestens einen zusätzlichen dünnwandigen Röhrenelements (17, 18 bzw. 19) und des mindestens einen umhüllten elektrischen Leiters (41, 42, 43, 44, 45 bzw. 46) zu gewährleisten, so daß das Dielektrikum die äußeren Zwischenräume der sich spiralförmig erstreckenden Röhrenelemente (17, 18, 19) und der elektrischen Leiter (41, 42, 43, 44, 45 bzw. 46) füllt.

6. Lichtleitfaser-Übertragungskabel (10'') mit einer bis zu einer großen Anzahl physisch und mechanisch geschützter Lichtleitfasern und tragender Widerstandselemente nach Anspruch 5, ferner dadurch gekennzeichnet, daß jedes genannte mindestens eine zusätzliche dünnwandige Röhrenelement (17, 18, 19) in einem gewünschten Verhältnis in einem Ring, der um das genannte dünnwandige, zentrale Röhrenelement (20) gebündelt ist und der sich longitudinal spiralförmig um dieses ersreckt, abwechselnd mit jedem genannten mindestens einen umhüllten elektrischen Leiter (41, 42, 43, 44, 45 bzw. 46) vorgesehen ist.

7. Lichtleitfaser-Übertragungskabel (10') mit einer bis zu einer großen Anzahl physisch und mechanisch geschützter Lichtleitfasern und tragender Widerstandselemente nach Anspruch 4, ferner dadurch gekennzeichnet, daß jeder genannte ringförmige, dielektrische Bereich (25) eine halbleitende Litzenabschirmung (25') aufweist, die sich in unmittelbarem Kontakt mit dem genannten mindestens einen umhüllten elektrischen Leiter (40) befindet, und wobei die Litzenabschirmung die äußersten kleinen Zwischenräume benachbarter Leiter füllt, und wobei über und angrenzend an sowie in engem Kontakt mit der halbleitenden Litzenabschirmung (25') ein isolierender Ring (25) angeordnet ist.

8. Lichtleitfaser-Übertragungskabel (10'') mit einer bis zu einer großen Anzahl physisch und mechanisch geschützter Lichtleitfasern und tragender Widerstandselemente nach Anspruch 5, ferner dadurch gekennzeichnet, daß jeder genannte ringförmige, dielektrische Bereich (25) eine halbleitende Litzenabschirmung (25') aufweist, die sich in unmittelbarem Kontakt mit dem genannten mindestens einen umhüllten elektrischen Leiter (41, 42, 43, 44, 45 bzw. 46) und dem genannten mindestens einen zusätzlichen dünnwandigen Röhrenelement (17, 18, 19) befindet, und wobei die Litzenabschirmung (25') die äußersten kleinen Zwischenräume zwischen den Elementen füllt, und wobei über und angrenzend an sowie in engem Kontakt mit der halbleitenden Litzenabschirmung (25') ein isolierender Ring (25) angeordnet ist.

9. Lichtleitfaser-Übertragungskabel (10) mit einer bis zu einer großen Anzahl physisch und mechanisch geschützter Lichtleitfasern und tragender Widerstandselemente nach Anspruch 1, ferner gekennzeichnet durch:
ein haftfähiges, polymeres Bindemittel (20b), das sich auf dem genannten dünnwandigen, zentralen Röhrenelement (20) befindet, um den ringförmigen, dielektrischen Bereich (25) mit dem Element zu verbinden, so daß eine integrale elektrooptisch-mechanische Konstruktion vorgesehen wird.

10. Lichtleitfaser-Übertragungskabel (10'') mit einer bis zu einer großen Anzahl physisch und mechanisch geschützter Lichtleitfasern und tragender Widerstandselemente nach Anspruch 1, 2, 3 oder 4, ferner dadurch gekennzeichnet, daß die äußere Schicht der tragenden Metallitzen (70') in einer umfänglich symmetrischen Anordnung konfiguriert ist, wobei benachbarte Litzen gleichmäßige Zwischenräume aufweisen, um die darunterliegende Schicht tragender Metallitzen (60') teilweise abzudecken.

11. Lichtleitfaser-Übertragungskabel (10, 10', 10'') mit einer bis zu einer großen Anzahl physisch und mechanisch geschützter Lichtleitfasern und tragender Widerstandselemente nach einem der vorstehenden Ansprüche, dadurch gekennzeichnet, daß das genannte zentrale Röhrenelement (20) mit einem Außendurchmesser von 0,75 mm bis 3,2 mm ausgebildet ist.

12. Lichtleitfaser-Übertragungskabel (10'') mit einer bis zu einer großen Anzahl physisch und mechanisch geschützter Lichtleitfasern und tragender Widerstandselemente nach Anspruch 2 oder 3, ferner gekennzeichnet durch:
mindestens ein zusätzliches dünnwandiges Röhrenelement (17, 18, 19), das dem genannten dünnwandigen, zentralen Röhrenelement (20) entspricht, wobei das mindestens eine zusätzliche Röhrenelement um das genannte dünnwandige, zentrale Röhrenelement (20) gebündelt ist und sich longitudinal spiralförmig um das zentrale Röhrenelement erstreckt;
mindestens eine zusätzliche Lichtleitfaser (17', 18', 19'), die sich in jedem der genannten zusätzlichen dünnwandigen Röhrenelemente (17, 18, 19) der Länge nach erstreckt, und wobei jede Faser mit einer entsprechend berechneten Rückdrehung versehen ist, um die bei der Herstellung des spiralförmigen Wegs in jeder zusätzlichen Lichtleitfaser (17', 18', 19') induzierte Drehspannung zu versetzen, und um die Übertragung der optischen Daten mit reduzierten Doppelbrechungen durch dynamische Beanspruchung zu gewährleisten; und
ein Gel (16'), das jedes zusätzliche dünnwandige Röhrenelement (17, 18, 19) füllt; und
mindestens einen umhüllten elektrischen Leiter (41, 42, 43, 44, 45 bzw. 46), der um das genannte dünnwandige, zentrale Röhrenelement (20) gebündelt ist und der sich longitudinal spiralförmig um das zentrale Röhrenelement erstreckt;
wobei der genannte ringförmige, dielektrische Bereich (25) druckgespritzt wird, um die Abdeckung des mindestens einen zusätzlichen dünnwandigen Röhrenelements (17, 18, 19) und des mindestens einen umhüllten elektrischen Leiters (41, 42, 43, 44, 45, 46) zu gewährleisten, so daß das Dielektrikum die äußeren Zwischenräume der sich spiralförmig erstreckenden Röhrenelemente und der elektrischen Leiter füllt, und wobei die äußere Schicht der tragenden Metallitzen (70') in einer umfänglich symmetrischen Anordnung gestaltet ist, wobei benachbarte Litzen gleichmäßige Zwischenräume aufweisen, um die darunterliegende Schicht tragender Metallitzen (60) teilweise abzudecken.

13. Lichtleitfaser-Übertragungskabel (10') mit einer bis zu einer großen Anzahl physisch und mechanisch geschützter Lichtleitfasern und tragender Widerstandselemente nach Anspruch 4, ferner gekennzeichnet durch:
ein haftfähiges, polymeres Bindemittel (20b), das sich auf den Außenoberflächen des genannten mindestens einen umhüllten elektrischen Leiters befindet, um den ringförmigen, dielektrischen Bereich (25) damit zu verbinden, so daß eine integrale elektrooptisch-mechanische Konstruktion vorgesehen wird.

14. Verwendung eines Lichtleitfaser-Übertragungskabels (10, 10', 10'') nach einem der Ansprüche 1-13 zur Übertragung optischer Daten in einer Unterwasserumgebung, wobei die Verwendung folgendes umfaßt: Schleppen bzw. Ziehen verschiedener an dem Kabel angebrachter Reihenvorrichtungen bzw. Instrumente, bzw. den Betrieb eines ferngesteuerten Fahrzeugs am Ende des Kabels, bzw. Herstellung einer Unterwasserkommunikation bzw. einer Sensordatenansammlung durch das Kabel.

15. Verwendung eines Lichtleitfaser-Übertragungskabels (10, 10', 10'') nach Anspruch 14, ferner dadurch gekennzeichnet, daß die Übertragung der optischen Daten bei den Unterwasseranwendungen die rauscharme, phasenmodulierte Datenübertragung bzw. optische Datenübertragungen mit geringen Doppelbrechungen durch dynamische Beanspruchung umfaßt.

## Revendications

1. Câble de transmission (10) par fibre optique comprenant de une à un grand nombre de fibres optiques protégées physiquement et mécaniquement et des éléments d'organe structurel porteur comprenant :
un élément tubulaire central (20) s'étendant longitudinalement et coïncidant avec l'axe du câble, l'élément tubulaire étant fait d'une matière présentant une résistance à la compression permettant de résister aux déformations radiales dirigées vers l'intérieur ;
au moins une fibre optique (15) disposée longitudinalement à l'intérieur de l'élément tubulaire central ;
un gel (16) remplissant ledit intérieur de l'élément tubulaire central comprenant ladite au moins une fibre optique afin d'y supprimer tout espace vide ;
une région diélectrique (25) de forme annulaire extérieurement coaxiale et adjacente audit élément tubulaire central ; et
au moins une couche de fils métalliques (60) porteurs disposés à l'extérieur de la région diélectrique (25) ; et
caractérisé en ce que :
ledit élément tubulaire central (20) a un petit diamètre et une paroi mince et est formé avec un diamètre extérieur égal à un multiple d'environ 10 et 16,5 fois les dimensions de son épaisseur de paroi afin d'empêcher une perte de signal due à la biréfringence sous contrainte dynamique ;
ledit élément tubulaire central (20) comporte un seul joint soudé longitudinal (20a) pour former un corps d'un seul tenant dont l'intérieur est hermétiquement fermé ;
ledit gel (16) remplissant ledit intérieur de l'élément tubulaire central (20) forme un couplage mécanique entre ladite au moins une fibre optique (15) et l'intérieur dudit élément tubulaire central (20) à paroi mince ; et
ladite au moins une couche de fils métalliques porteurs (60) est disposée immédiatement à l'extérieur de ladite région diélectrique (25) et de manière contiguë à celle-ci.

2. Câble de transmission à fibre optique comprenant de une à un grand nombre de fibres optiques (15) protégées physiquement et mécaniquement et un élément (60) structurel porteur tel que caractérisé dans la revendication 1 et caractérisé en outre en ce que :
ledit élément tubulaire central (20) de petit diamètre et à paroi mince est une matière en alliage d'acier ayant des propriétés et des dimensions de nature à empêcher la transmission de suffisamment de chaleur pour endommager ladite au moins une fibre optique lorsque ledit joint soudé unique longitudinal est réalisé avec précision dans ledit élément tubulaire central à paroi mince par soudure de précision au laser ; et en ce que ladite au moins une couche de fils métalliques porteurs (60) comprend au moins deux couches hélicoïdales de sens contraire de fils métalliques porteurs (60, 70).

3. Câble de transmission à fibre optique (10, 10' ou 10") comprenant de une à un grand nombre de fibres optiques (15) protégées physiquement et mécaniquement et des éléments (60, 70) d'organe structurel porteurs tel que caractérisé dans la revendication 2 et caractérisé en outre en ce que :
une couche (50) électriquement conductrice gainée est interposée dans la région diélectrique (25) de forme annulaire s'étendant longitudinalement et coaxialement autour dudit élément tubulaire central à paroi mince (20) ;
un composé élastomère (80a) est disposé entre au moins des couches adjacentes de fils porteurs (60, 70) remplissant à la fois les interstices intérieurs et extérieurs associés avec les couches ; et
une chemise extérieure (80) extrudée sous pression remplit tous les espaces interstitiels extérieurs entre les fils métalliques adjacents dans la couche extérieure (70) et recouvre les couches pratiquement équilibrées en torsion, ladite couche électriquement conductrice gainée, et ledit élément tubulaire central à paroi mince avec ladite au moins une fibre optique formant une structure de câble électro-opto-mécanique intégré.

4. Câble de transmission à fibre optique (10') comprenant de une à un grand nombre de fibres optiques (15) protégées physiquement et mécaniquement et d'éléments (60, 70) d'organes structurels porteurs tel que caractérisé dans la revendication 2 ou 3, caractérisé en outre par :
une pluralité de fils de cuivre gainés (40 ou 40') rassemblés autour de, s'étendant longitudinalement en un trajet hélicoïdal autour de, et espacés dudit élément tubulaire central à paroi mince (20), lesdits fils de cuivre gainés (50), ladite région diélectrique de forme annulaire (25), ledit élément tubulaire à paroi mince (20) avec ladite au moins une fibre optique (15) et lesdites couches (60, 70) presque équilibrées en torsion formant une structure de câble électro-opto-mécanique intégré.

5. Câble de transmission à fibre optique (10") comprenant de une à un grand nombre de fibres optiques (15) protégées physiquement et mécaniquement et d'éléments (60, 70) d'organe structurel porteur tel que caractérisé dans la revendication 2, 3 ou 4, caractérisé en outre par :
au moins un élément tubulaire supplémentaire à paroi mince (17, 18 ou 19) ayant les mêmes composants que ledit élément tubulaire central à paroi mince et rassemblé autour de, et s'étendant longitudinalement en un trajet hélicoïdal autour dudit élément tubulaire central à paroi mince ;
au moins une fibre optique supplémentaire (17', 18' ou 19') s'étendant longitudinalement dans ledit élément tubulaire supplémentaire à paroi mince (17, 18 ou 19), chacun étant prévu avec une contre-torsion calculée de manière appropriée pour compenser l'effort de torsion induit par la fabrication dudit trajet hélicoïdal de chacune desdites fibres optiques supplémentaires (17', 18' ou 19') et pour assurer aux données optiques transmises une faible biréfringence sous contrainte dynamique ;
un gel (16') remplissant chacun desdits éléments tubulaires supplémentaires à paroi mince (17, 18 ou 19) ; et
au moins un conducteur électrique gainé (41, 42, 43, 44, 45 ou 46) rassemblé autour de et s'étendant longitudinalement en un trajet hélicoïdal autour dudit élément tubulaire central à paroi mince (20), ladite région diélectrique de forme annulaire étant extrudée sous pression pour assurer le recouvrement dudit au moins un élément tubulaire supplémentaire à paroi mince (17, 18 ou 19) et dudit au moins un conducteur électrique gainé (41, 42, 43, 44, 45, ou 46) de façon que le diélectrique remplisse les interstices extérieurs des éléments tubulaires s'étendant hélicoïdalement (17, 18, 19) et des conducteurs électriques (41, 42, 43, 44, 45 ou 46).

6. Câble de transmission à fibre optique (10") comprenant de une à un grand nombre de fibres optiques protégées physiquement et mécaniquement et d'éléments d'organe structurel porteur tel que caractérisé dans la revendication 5, caractérisé en outre en ce que ledit au moins un élément tubulaire supplémentaire à paroi mince (17, 18 ou 19) alterne dans un rapport désiré avec chaque dit au moins un conducteur électrique gainé (41, 42, 43, 44, 45 ou 46) dans un anneau rassemblé autour de et s'étendant longitudinalement dans ledit trajet hélicoïdal autour dudit élément tubulaire central à paroi mince (20).

7. Câble de transmission à fibre optique (10') comprenant de une à un grand nombre de fibres optiques protégées physiquement et mécaniquement et d'éléments d'organe structurel porteur tel que caractérisé dans la revendication 4, caractérisé en outre en ce que chaque dite région diélectrique de forme annulaire (25) comporte un blindage de fil semi-conducteur (25') directement en contact avec ledit au moins un conducteur électrique gainé (40) et ledit blindage de fil remplit les interstices extérieurs des conducteurs adjacents et un anneau isolant (25) est disposé sur et est adjacent à et est en contact intime avec ledit blindage de fil semi-conducteur (25').

8. Câble de transmission à fibre optique (10") comprenant de une à un grand nombre de fibres optiques protégées physiquement et mécaniquement et d'éléments d'organe structurel porteur tel que caractérisé dans la revendication 5, caractérisé en outre en ce que chaque dite région diélectrique de forme annulaire (25) comporte un blindage de fil semi-conducteur (25') directement en contact avec ledit au moins un conducteur électrique gainé (41, 42, 43, 44, 45 ou 46) et ledit au moins un élément tubulaire supplémentaire à paroi mince (17, 18, 19) et ledit blindage de fil (25') remplit les interstices extérieurs entre lesdits éléments et un anneau isolant (25) est disposé sur et est adjacent à et est en contact intime avec ledit blindage de fil semi-conducteur (25').

9. Câble de transmission à fibre optique (10) comprenant de une à un grand nombre de fibres optiques protégées physiquement et mécaniquement et d'éléments d'organe structurel porteur tel que caractérisé dans la revendication 1, caractérisé en outre par :
une matière polymère adhésive de liaison (20b) disposée sur ledit élément tubulaire central à paroi mince (20) pour y lier la région diélectrique de forme annulaire (25) et former une structure électro-opto-mécanique intégrée.

10. Câble de transmission à fibre optique (10'') comprenant de une à un grand nombre de fibres optiques protégées physiquement et mécaniquement et d'éléments d'organe structurel porteur tel que caractérisé dans la revendication 1, 2, 3 ou 4, caractérisé en outre en ce que la couche extérieure de fils métalliques (70') porteurs est configurée dans un agencement symétrique circonférentiellement avec les fils adjacents espacés de façon équidistante pour former une couverture partielle de la couche sous-jacente de fils métalliques porteurs (60).

11. Câble de transmission à fibre optique (10, 10', 10") comprenant de une à un grand nombre de fibres optiques protégées physiquement et mécaniquement et d'éléments d'organe structurel porteur tel que caractérisé dans l'une quelconque des revendications précédentes, caractérisé en ce que ledit élément tubulaire central (20) a un diamètre extérieur compris entre 0,75 mm et 3,2 mm.

12. Câble de transmission à fibre optique (10") comprenant de une à un grand nombre de fibres optiques protégées physiquement et mécaniquement et d'éléments d'organe structurel porteur tel que caractérisé dans la revendication 2 ou 3, caractérisé en outre par :
au moins un élément tubulaire à paroi mince supplémentaire (17, 18 ou 19) façonné comme ledit élément tubulaire central à paroi mince et rassemblé autour de, et s'étendant longitudinalement en un trajet hélicoïdal autour dudit élément tubulaire central à paroi mince (20) ;
au moins une fibre optique supplémentaire (17', 18' ou 19') s'étendant longitudinalement dans ledit élément tubulaire supplémentaire à paroi mince (17, 18 ou 19), chacun étant prévu avec une contre-torsion calculée de manière appropriée pour compenser l'effort de torsion induit par la fabrication dudit trajet hélicoïdal de chacune desdites fibres optiques supplémentaires (17', 18' ou 19') et pour assurer aux données optiques transmises une faible biréfringence sous contrainte dynamique ;
un gel (16') remplissant chacun desdits éléments tubulaires supplémentaires à paroi mince (17, 18 ou 19) ;
au moins un conducteur électrique gainé (41, 42, 43, 44, 45, 46) rassemblé autour de et s'étendant longitudinalement en un trajet hélicoïdal autour dudit élément tubulaire central à paroi mince (20) ;
ladite région diélectrique de forme annulaire étant extrudée sous pression pour assurer le recouvrement dudit au moins un élément tubulaire supplémentaire à paroi mince (17, 18 ou 19) et dudit au moins un conducteur électrique gainé (41, 42, 43, 44, 45, 46) de façon que le diélectrique remplisse les interstices extérieurs des éléments tubulaires s'étendant hélicoïdalement (17, 18, 19) et des conducteurs électriques et dans lequel la couche extérieure de fils métalliques porteurs (70') est fabriquée dans un agencement circonférentiellement symétrique avec des fils adjacents espacés de façon équidistante pour former une couverture partielle de la couche sous-jacente (60) de fils métalliques porteurs.

13. Câble de transmission à fibre optique (10') comprenant de une à un grand nombre de fibres optiques protégées physiquement et mécaniquement et d'éléments d'organe structurel porteur tel que caractérisé dans la revendication 4, caractérisé en outre par :
une matière polymère adhésive de liaison (20b) disposée sur ledit élément tubulaire central à paroi mince (20) pour y lier la région diélectrique de forme annulaire (25) et former une structure électro-opto-mécanique intégrée.

14. Utilisation d'un câble de transmission à fibre optique (10, 10', 10") telle que caractérisé dans l'une quelconque des revendications 1 à 13, pour transmettre des données optiques dans un environnement sous-marin, comprenant :
le remorquage de divers appareils ou instruments de réseau attachés au câble, ou le fonctionnement d'un véhicule télécommandé à l'extrémité du câble ou la réalisation de communications sous-marines ou la collecte de données de capteurs au moyen du câble.

15. Utilisation d'un câble de transmission à fibre optique (10, 10', 10") telle que caractérisée dans la revendication 14, et caractérisée en outre en ce que la transmission de données optiques comprend la transmission de données à modulation de phase et faible bruit ou des transmissions de données optiques avec une faible biréfringence sous contrainte dynamique dans lesdites applications sous-marines.
